# NEW EUROPEAN PATENT SPECIFICATION

(11) **EP 0 351 030 B2**
(45) Date of publication and mention of the opposition decision: **06.09.1995**
(45) Mention of the grant of the patent: 23.10.1991
(21) Application number: 89201902.7
(22) Date of filing: 19.07.1989
(51) Int. Cl.: A01G 9/02, B29C 45/33

(54) **A plant container and a method and mould for its manufacture**
Pflanzentopf sowie Verfahren und Form zu seiner Herstellung
Conteneur de plantes ainsi que procédé et moule pour sa fabrication

(30) Priority: 20.07.1988 NL 8801838
(43) Date of publication of application: 17.01.1990
(73) Proprietor: EMPEROR PLASTICS B.V., 2461 EW Ter Aar (NL)
(72) Inventor: Keijzer, Aloysius Leonardus Maria, NL-2461 EW Ter Aar (NL)
(74) Representative: Smulders, Theodorus A.H.J., Ir.

(56) References cited:
- CH-A- 169 976
- CH-A- 372 495
- DE-B- 1 062 978
- US-A- 2 812 548
- US-A- 3 020 594
- US-A- 4 315 382
- Nederlandse Vereniging voor Fijnmechanische Techniek, 1973, "Matrijzen voor kunststoffen - B"

## Description

This invention relates to a plant container as defined in the preamble of claim 1. Such a container is disclosed in CH-372.495.

It is a general object of the invention to improve this prior art plant container.

A first specific object of the invention is to design a plant container in such a way, that the container can be nested over a large distance in a pot of an identical plant container, so that nested containers occupy little space during storage and transport.

A second specific object of the invention is to achieve the above object while simultaneously assuring that the height of the rim of the tray is such that the tray can take up a sufficiently large volume of liquid.

A third specific object of the invention is to provide a plant container which can be easily manufactured.

More particularly, the invention seeks to attain the above objectives simultaneously.

The above objectives are attained by the technical features as recited in the characterizing part of claim 1.

Thus, the tray can be nested over a large distance in a pot of an identical flower pot with tray, while the tray can take up a sufficiently large volume of liquid due to the height of its rim. For manufacturing the plant container according to the present invention, the attainable small dimensions of the tray in horizontal direction are likewise advantageous, because when a moulded product is removed from a mould, the tray can be passed through an annular mould portion for forming an upper portion of the wall of the pot. The use of divided, complicated mould portions, which cause disfiguring division seams, for moulding the upper portion of the wall of the pot, which is exposed to view in use, can thus be avoided. The extension of the wall portion at the lower end of the pot substantially parallel to the rim region of the tray enables mould portions for providing spacing between the rim region of the tray and the wall portion of the pot opposite and substantially parallel thereto to be retracted in a direction parallel to the rim region of the tray.

Since the wall portion of the pot extending substantially parallel to the rim region of the tray, extends obliquely downwardly and inwardly relatively to the prolongation of a superimposed part of the wall, with the dimensions of the tray in horizontal directions always being smaller than the largest dimensions in the same direction of the opposite wall portion, a very compact nesting of stacked plant containers can be obtained with a relatively large effective holding capacity of the pot A plant container can be nested within the next container with the rim of its tray down to the level of the upper edge of the wall portion of the pot of such next plant container opposite the rim of the tray thereof.

The plant container according to the present invention can be designed as a said of revolution, but alternatively may be of triangular, polygonal or oval shape in top view.

Furthermore, the present invention relates to a method of manufacturing a plant container as defined above, using a mould.

The method according to the present invention provides that, during the removal of the moulded material from the mould, sliding pieces of the mould which, during the moulding process, define a space between the tray and the pot, are displaced with a component in a direction outward from a heartline of the formed pot with tray, at an angle to the opening direction of the mould smaller than the angle at which the generatrices of the top of the rim region of the tray extend with respect of this opening direction.

This method offers the advantage that the sliding pieces, which are necessary by reason of the different directions of release of the pot and the space between the pot and the tray, can be driven by opening and closing the mould. Separate, in particular hydraulic, drive systems are hence superfluous, so that machine cost is limited and the cycle time remains limited to at most half the cost that would be necessary when such separate drive systems are used. Furthermore, in this way the advantage is obtained that the sliding pieces, through the use of the resilience of the material from which the product is made, can be pulled out of the space between the tray and the pot even when this space is not fully "releasing". This is made possible because the difference between the direction of release of that space and the direction of displacement of the sliding pieces results in a displacement of the formed end product in opening direction. Due to this displacement, the tray is released from the mould cavity wherein this has been moulded, affording it an opportunity to deflect, if necessary, in the direction of said cavity when the sliding pieces are retracted.

This advantage is especially of importance in the manufacture of a plant container made substantially as a solid of revolution, in which the walls of both the pot and the rim region of the tray, which define a space between them, are cone segments having substantially parallel walls. As the directions of release of such a space, in turn, form generatrices of a cone, a great many sliding pieces would be needed to allow release if there is a small angle between the tray and the opposite pot wall. According to the present invention, however, the resilience of the material of the moulded plant container is used to advantage, whereby the number of sliding pieces can be limited.

In a further elaboration of the present invention, during the opening of the mould the sliding pieces are driven in a very simple manner by springs which are expanded as the mould is being opened. During the closing of the mould, the sliding pieces are pressed downwards in inward direction by a superjacent central portion of the mould and at the same time the springs are stressed again.

Preferably, during these moments, the sliding pieces are conducted by, and driven through, pins and, in addition, supported by walls of a part of the mould likewise defining the shape of the underside of the tray, and which walls are parallel to the sliding pieces. The pins exert the relatively small forces occurring during unmoulding and further prevent the sliding pieces from getting beyond the desired trajectory. The additional support by the walls parallel to the pins ensures the absorption of the substantial forces occurring in the moulding process proper.

According to a further elaboration of the present invention, the sliding pieces are displaced relatively to a central portion of the mould bounding the top of these sliding pieces, along boundary surfaces including an angle with the opening direction of the mould. The inclination achieves that this central portion, defining the shape of the top portion of the wall of the pot, can drive the displacements of the sliding pieces, thereby remaining centered without additional means, while at the same time the sliding pieces are kept pressed against outer guiding surfaces. Furthermore, as a result of the sliding movement of the wall portion along the sliding pieces, the central portion of the mould, when being opened, extends outwards over a distance smaller than the distance over which the sliding pieces are then displaced in direction of opening of the mould. As a result, the mould need be opened less far for releasing a moulded flower pot with tray, than would be the case when the central portion should be displaced over an equal distance in the opening direction of the mould as are the sliding pieces. This again leads to an additional shortening of the cycle time and hence of the machine cost per product.

Finally, the present invention relates to a mould for application of the above described method. For the application of this method, the mould according to the present invention is provided with sliding pieces whose displacement guide includes an angle with the opening direction of the mould smaller than the angle at which the generatrices determining the top of the rim region of the tray extend relative to the opening direction, a central portion linking up with said sliding pieces at the open end of the mould, said central portion adjoining said sliding pieces along boundary surfaces which enclose an angle with the opening direction of the mould that is larger than, or equal to, the angle relative to the opening direction at which said generatrices extend.

As each displacement guide of the sliding pieces encloses a smaller angle with the opening direction of the mould than does the direction at which the generatrices of the cavity parts for forming the top rim region of the tray extend, the sliding pieces can be driven in a simple manner by the movements of the mould during the opening and closing thereof. Moreover, the simultaneous displacement in outward direction and in the opening direction of the mould makes it possible, using the resilience of the material, to release the sliding pieces from the space between tray and pot defined by these pieces. As a matter of fact, should the additional displacement component in the opening direction of the mould be absent, the portion of the tray bounding said space would be prevented by the subjacent mould portion from being resiliently deflected and the respective portion of the sliding piece could not be pulled out of this space. The feature that the central portion links up along boundary surfaces with these sliding pieces enclosing an angle with the direction of opening of the mould, provides the advantage that the sliding pieces are pressed against the walls of a mould portion abutting therearound and that for releasing a formed product out of the mould, the central portion need be displaced over a smaller distance in the direction of openings of the mould than the distance over which the sliding pieces are displaced in that direction.

According to a still further elaboration of the present invention, the boundary surfaces along which the sliding pieces link up with the central portion, form portions of elliptical cylinder surfaces having separate axes. This enables abutment of these surfaces on a frusto-conical lower portion of the pot, as is preferably employed in an embodiment of the present invention formed as a solid of revolution.

Some embodiments of the present invention will now be described, by way of example, with reference to the accompanying drawings, in which :
Fig. 1 is a perspective cross-sectional view of a plant container according to the present invention;
Fig. 2 is a cross-sectional side view of two plant containers according to Fig. 1 nested one into the other;
Fig. 3 is a diagrammatic cross-sectional side view of a mould for manufacturing a plant container according to Fig. 1 ; and
Fig. 4 is a diagrammatic side view according to Fig. 3 with the mould in partly opened condition.

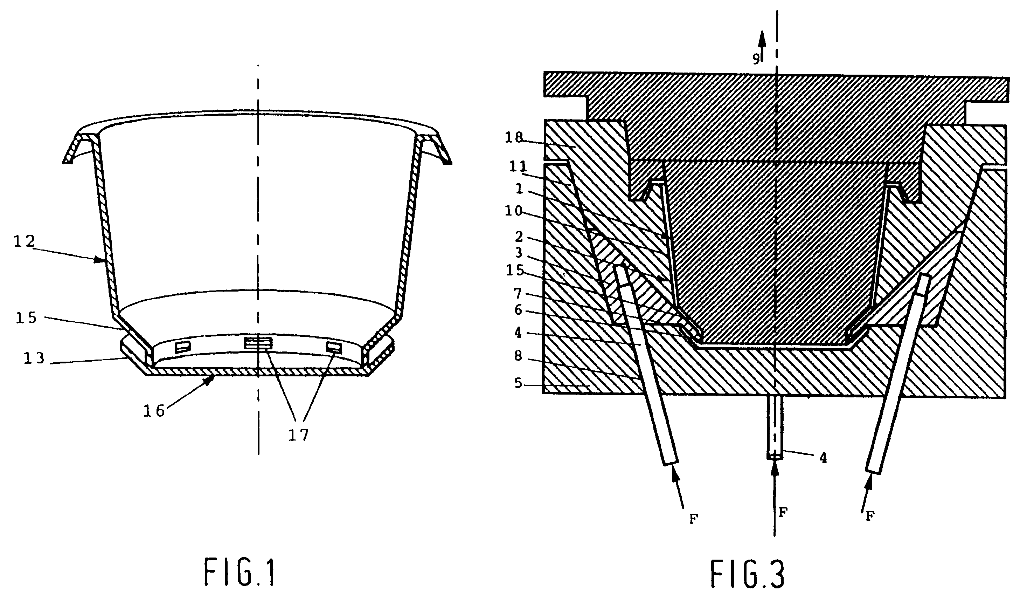

As shown in Fig. 1, a plant container according to the present invention consists essentially of the same piece of material, i.e. a pot 12 formed integrally with a tray 16.

The tray 16 is provided with an rim region 13 which, according to the embodiment shown, forms a cone frustum which extends substantially parallel as viewed in cross section to a wall portion 15 extending near the bottom of pot 12 in upward and outward direction. Thus, the space between said wall portion 15 and the rim region of the tray is releasable, if necessary using the resilience of the material from which these are made. When pot 12 and tray 16, as shown in the embodiment, are formed as a solid of revolution, and the space between the tray and the pot is releasable only in upward direction, obliquely radially outwards, it is highly advantageous during the release to use the resilience of the material, because in that case a limited number of core elements for forming this space will suffice.

At 17 are illustrated openings, which are formed together with the plant container, and, as is kwown per se, serve for venting potting soil or other substrate in the pot and for passing water from pot 12 to tray 16 and vice versa.

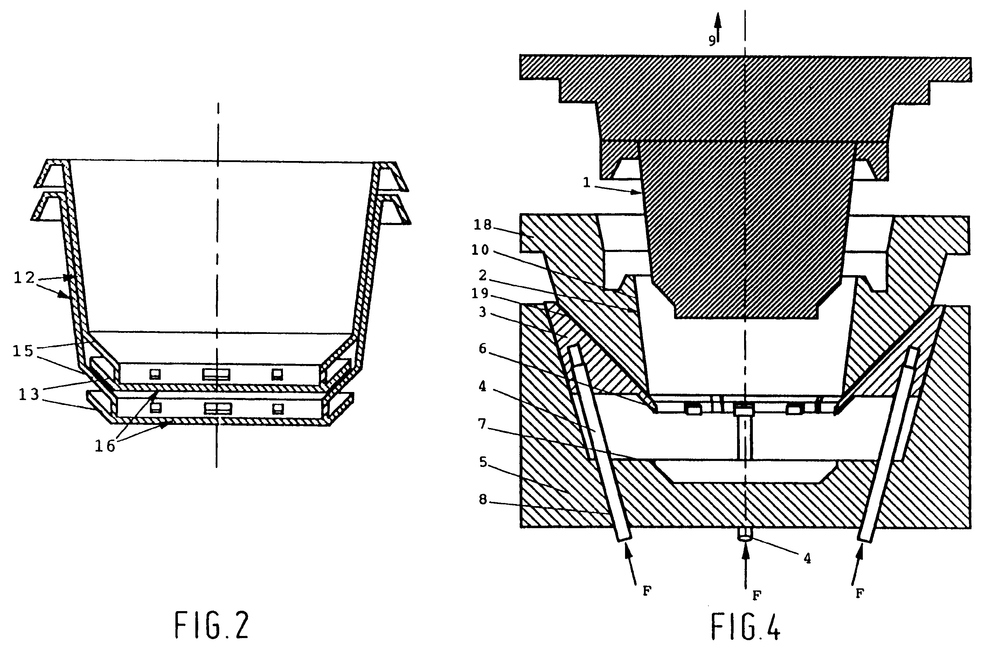

Fig. 2 shows how plant containers according to the embodiment shown in Fig. 1 can be nested in stacked position. Such compact stacking is made possible because, as viewed in cross-section, rim region 13 of tray 16 extends substantialy parallel to wall portion 15, while tray 16 has a smaller diameter than the inside of pot 12 at the upper end of this outwardly extending wall portion 15 at the bottom of pot 12.

A mould for manufacturing the embodiment of the plant container according to Fig. 1 is shown in the closed state in Fig. 3. The mould comprises a plurality of parts 1, 3 and 18 movable relatively to a fixed bottom portion. Reference numeral 1 indicates a core member of the mould and numeral 2 illustrates a cavity forming the exterior of the flower pot and the tray.

For forming the space between rim region 13 of tray 16 and wall portion 15 of pot 12, there are provided sliding pieces 3 having pins 4 for their guidance and for transmitting forces for their displacement. The displacement in an opening direction indicated with an arrow 9, with simultaneous displacement in outward direction, can be effected by means of springs which are unstressed when the mould is opened. The exercise of force of these springs is shown diagrammatically with arrows F.

Extending parallel to pins 4, corresponding therewith, are surfaces 11, which support sliding pieces 3 in outward direction.

As viewed in the opening direction, sliding pieces 3, along guide surfaces 19 inclined relatively to the opening direction, link up with a central mould portion 18 forming at 10 the exterior of the wall of pot 12.

Fig. 4 shows the mould according to Fig. 3 in a slightly opened position. The sliding pieces are provided with inwardly extending end faces 6, while the space for forming tray 16 has an outside end rim 7. In Fig. 4 the mould is opened so far that the end faces of sliding pieces 3 are located further outwards than the end rim 7. In this position, the mould is opened sufficiently far to enable a product formed therein to be removed from mould cavity 2, whereby the outside rim of tray 16, defined by the end rim 7 of the cavity forming tray 16, passes along the end faces 6. The complete removal of the product requires of course core portion 1 to be displaced further in the opening direction than the position shown in Fig. 4.

Fig. 4 also shows that, owing to the angle which the guide surfaces 19 make with the opening direction, the central portion 18, when the mould is opened, is displaced less far in the opening direction than are sliding pieces 3, so that the removal of a ready flower pot with tray requires core portion 1 to be displaced less far in the opening direction than would be the case when central portion 18 were displaced equally far in that direction as sliding pieces 3. Central portion 18 is always kept centered by the inclined surfaces 19.

The surfaces 19 are formed as segments of bodies having such an axis and elliptical cross section as to link up with the frusto-conical wall portion 15 of pot 12.

## Claims

1. A plant container comprising a pot with an open top end and a bottom end linking up with a tray, the pot and the tray being jointly constructed substantially in one piece, with the tray having a rim region extending in upward, oblique, outward direction, characterized in that
the plant container is a moulded product in which
a lower wall portion (15) of the pot (12), located opposite the rim region (13) of the tray (16), as viewed in cross section, extends substantially parallel to said rim region (13) of said tray (16);
that the wall portion (15) of the pot (12) extending substantially parallel to the rim region (13) of the tray (16) extends in downward, oblique, inward direction with respect to the prolongation of a superjacent portion of the wall;
that the dimensions in horizontal direction of the tray (16) are smaller than the inside width in the same direction of the open top end of the pot, in such a way, that the plant container can be nested in the pot of an identical plant container;
and that the dimensions of the tray (16) in horizontal direction are smaller than the largest dimensions in the same direction of said opposite wall portion (15).

2. A method of manufacturing a pot with a tray as claimed in claim 1 using a mould, characterized in that when the formed pot with a tray is released from the mould, sliding pieces of the mould defining, during the forming, a space between the tray and the pot, effect a displacement with a component in a direction outward from a heartline of formed pot with tray, at an angle with the opening direction of the mould smaller than the angle at which the generatrices of the top of the rim region of the tray extend relatively to that opening direction.

3. A method as claimed in claim 2, characterized in that during the opening of the mould said sliding pieces are driven by springs that are being unstressed.

4. A method as claimed in claim 3, characterized in that the sliding pieces are guided by, and driven through, pins and, moreover, are supported by walls parallel thereto, of a part of the mould that likewise defines the shape of the bottom of the tray.

5. A method as claimed in any one of claims 2-4, characterized in that the sliding pieces are displaced relatively to a mould portion adjoining the top of said pieces along boundary surfaces enclosing an angle with the opening direction of the mould.

6. A mould for use in the method as claimed in any one of claims 2-5, characterized by sliding pieces (3) whose displacement guide (4) encloses an angle with the opening direction (9) of the mould smaller than the angle at which the generatrices determining the top of the rim region of the tray extend relative to the opening direction (9), a central portion (18) linking up at the open end of the mould with said sliding pieces (3), said central portion (18) abutting on said sliding pieces along boundary surfaces (19) enclosing an angle with the opening direction (9) of the mould that is larger than, or equal to, the angle relative to the opening direction of which said generatrices extend.

7. A mould as claimed in claim 6, characterized in that the boundary surfaces (19) along which the sliding pieces (3) link up with said central portion (18), form portions of elliptical tube surfaces having separate axes.

## Patentansprüche

1. Ein Pflanzbehältnis aufweisend einen Topf mit einem oberen offenen Ende und einem Bodenende, welches mit einer Schale verbunden ist, wobei der Topf und die Schale gemeinsam, im wesentlichen einstückig ausgebildet sind, wobei die Schale einen Randbereich aufweist, welcher sich in einer Richtung nach oben, schräg-laufend und auswärts gerichtet erstreckt, dadurch gekennzeichnet, daß das Pflanzbehältnis ein Formprodukt ist, bei welchem ein unterer Wandbereich (15) des Topfes (12), angeordnet entgegengesetzt zu dem Randbereich (13) der Schale (16), in einem Querschnitt gesehen sich im wesentlichen parallel zu dem Randbereich (13) der Schale (16) erstreckt;
daß der Wandbereich (15) des Topfes (12) sich im wesentlichen parallel zu dem Randbereich (13) der Schale (16) in einer Richtung nach unten, schräg-laufend und nach innen erstreckt in Bezug auf eine Verlängerung eines darüber liegenden Wandbereiches;
daß die Abmessungen der Schale in horizontaler Richtung kleiner sind als die innere Breite in derselben Richtung des oberen offenen Endes des Topfes, auf eine solche Weise, daß das Pflanzbehältnis in den Topf eines identischen Pflanzbehältnisses eingeschachtelt werden kann;
und daß die Abmessungen der Schale (16) in horizontaler Richtung kleiner sind als die größten Abmessungen in derselben Richtung des gegenüberliegenden Wandbereiches (15).

2. Verfahren zur Herstellung eines Topfes mit einer Schale nach Anspruch 1, unter Verwendung eines Formwerkzeuges, dadurch gekennzeichnet, daß dann, wenn der geformte Topf mit einer Schale von dem Formwerkzeug freigegeben wird, Gleitstücke des Formwerkzeuges, welche während des Formens einen Raum zwischen der Schale und dem Topf ausbilden, eine Versetzung mit einer Komponente in einer Auswärtsrichtung von einer Kernlinie des gebildeten Topfes mit der Schale bewirken, in einem Winkel zu der Öffnungsrichtung des Formwerkzeuges welcher kleiner ist als der Winkel, in welchem sich die Erzeugenden eines obersten Endes des Randbereiches der Schale erstrecken, relativ zu dieser Öffnungsrichtung.

3. Verfahren nach Anspruch 2, dadurch gekennzeichnet, daß während des Öffnens des Formwerkzeuges die Gleitstücke mittels Federn angetrieben sind, die entspannt werden.

4. Verfahren nach Anspruch 3, dadurch gekennzeichnet, daß die Gleitstücke mittels Stiften geführt und angetrieben sowie von parallelen Wänden getragen sind, die dem Teil des Formwerkzeuges zugehören, das auch die Ausbildung der Bodenfläche der Schale bestimmt.

5. Verfahren nach einem der Ansprüche 2 bis 4, dadurch gekennzeichnet, daß die Gleitstücke relativ zu einem an den oberen Enden dieser Gleitstücke angrenzenden Formteil des Formwerkzeuges entlang von Grenzflächen bewegt werden, die mit einer Öffnungsrichtung des Formwerkzeuges einen Winkel einschließen.

6. Formwerkzeug zur Verwendung in dem Verfahren nach einem der Ansprüche 2 bis 5, gekennzeichnet durch Gleitstücke (3), deren Verschiebeführung (4) mit der Öffnungsrichtung (9) des Formwerkzeuges einen Winkel einschließen, der kleiner ist als der Winkel, in welchem sich die Erzeugenden, welche das oberste Ende der Randregion der Schale bestimmen, sich relativ zu der Öffnungsrichtung (9) erstrecken, durch einen Zentralbereich (18), welcher an einem offenen Ende des Formwerkzeuges mit den Gleitstücken (3) verbunden ist, wobei der Zentralbereich (18) an die Gleitstücke entlang von Grenzflächen (19) anstößt, welche einen Winkel mit der Öffnungsrichtung (9) des Formwerkzeuges einschließen, der größer oder gleich ist zu dem Winkel relativ zu der Öffnungsrichtung, in welchem sich die Erzeugenden erstrecken.

7. Formwerkzeug nach Anspruch 6, dadurch gekennzeichnet, daß die Grenzflächen (19), entlang welchen die Gleitstücke (3) mit dem Zentralbereich (18) verbunden sind, Bereiche von elliptischen Röhrenflächen formen, welche gesonderte Achsen besitzen.

## Revendications

1. Récipient pour plantes comprenant un pot avec une extrémité supérieure ouverte et une extrémité de fond reliées par un plateau, le pot et le plateau étant composés conjointement essentiellement en une seule pièce, le plateau possédant une région à rebord s'étendant dans une direction ascendante oblique, extérieure, caractérisé en ce que
le récipient pour plantes est un produit moulé dans lequel une partie de paroi inférieure (15) du pot (12) située à l'opposé de la région de rebord (13) du plateau (16), vue en coupe transversale, s'étend en direction essentiellement parallèle à ladite région de rebord (13) dudit plateau (16);
en ce que la partie de paroi (15) du pot (12) s'étendant de manière essentiellement parallèle à la région de rebord (13) du plateau (16) part dans une direction descendante oblique intérieure par rapport à la prolongation d'une partie surjacente de la paroi;
en ce que les dimensions dans une direction horizontale du plateau (16) sont inférieures à la largeur interne dans la même direction de l'extrémité supérieure ouverte du pot de telle manière que le récipient pour plantes puisse être logé dans le pot d'un récipient pour plantes identique;
et en ce que les dimensions du plateau (16) en direction horizontale sont inférieures aux dimensions les plus grandes dans la même direction de la partie de paroi opposée (15).

2. Procédé de fabrication d'un pot avec un plateau selon la revendication 1 en utilisant un moule, caractérisé en ce, lorsque le pot formé avec un plateau est libéré du moule, les pièces coulissantes du moule définissant pendant le formage un espace entre le plateau et le pot effectuent un déplacement avec une composante dans une direction extérieure par rapport à une ligne médiane du pot formé avec le plateau, dans un angle avec la direction d'ouverture du moule inférieur à l'angle auquel les génératrices du dessus de la région de rebord du plateau s'étendent par rapport à cette direction d'ouverture.

3. Procédé selon la revendication 2, caractérisé en ce que, pendant l'ouverture du moule, lesdites pièces de glissement sont entraînées par des ressorts qui sont non chargés.

4. Procédé selon la revendication 3, caractérisé en ce que les pièces de glissement sont guidées et entraînées par des broches et sont en outre soutenues par des parois parallèles à celles-ci d'une partie du moule qui définissent de manière similaire la forme du fond du plateau.

5. Procédé selon l'une quelconque des revendications 2 à 4, caractérisé en ce que les pièces coulissantes sont déplacées par rapport à une partie de moule adjacente au-dessus desdites pièces le long des surfaces de délimitation formant un angle avec la direction d'ouverture du moule.

6. Moule à utiliser dans le procédé selon l'une quelconque des revendications 2 à 5, caractérisé par des pièces coulissantes (3) dont la glissière de déplacement (4) forme un angle avec la direction d'ouverture (9) du moule inférieur à l'angle dont les génératrices déterminant le dessus de la région de rebord du plateau s'étendent par rapport à la direction d'ouverture (9), une partie centrale reliant l'extrémité ouverte du moule avec lesdites pièces coulissantes (3), ladite partie centrale aboutant lesdites pièces coulissantes le long des surfaces de délimitation formant un angle avec la direction d'ouverture (9) du moule supérieur ou égal à l'angle par rapport à la direction d'ouverture dans laquelle s'étendent lesdites génératrices.

7. Moule selon la revendication 6, caractérisée en ce que les surfaces de délimitation (19) le long desquelles les pièces coulissantes (3) sont reliées à ladite partie centrale forment des parties de surfaces d'un tube elliptique possédant des axes séparés.
